(19) Europäisches Patentamt / European Patent Office / Office européen des brevets

(11) **EP 4 238 433 A1**

(12) # EUROPEAN PATENT APPLICATION
published in accordance with Art. 153(4) EPC

(43) Date of publication:
06.09.2023 Bulletin 2023/36

(21) Application number: 21885160.8

(22) Date of filing: 26.10.2021

(51) International Patent Classification (IPC):
*A24F 40/46* (2020.01)    *A24F 40/40* (2020.01)

(52) Cooperative Patent Classification (CPC):
**A24F 40/40; A24F 40/46**

(86) International application number:
**PCT/CN2021/126447**

(87) International publication number:
**WO 2022/089433 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.10.2020 CN 202011160206

(71) Applicant: Shenzhen First Union Technology Co., Ltd.
Shenzhen, Guangdong 518000 (CN)

(72) Inventors:
- **CHEN, Hanliang**
  Shenzhen, Guangdong 518000 (CN)
- **ZHANG, Xiaoming**
  Shenzhen, Guangdong 518000 (CN)
- **WANG, Kuan**
  Shenzhen, Guangdong 518000 (CN)
- **XU, Zhongli**
  Shenzhen, Guangdong 518000 (CN)
- **LI, Yonghai**
  Shenzhen, Guangdong 518000 (CN)

(74) Representative: **Proi World Intellectual Property GmbH**
**Obermattweg 12**
**6052 Hergiswil, Kanton Nidwalden (CH)**

(54) **AEROSOL GENERATION APPARATUS**

(57) An aerosol generation apparatus, comprising: a liquid storage unit (12), which is used for storing a liquid capable of generating an aerosol; a heating element (14), which is used for heating the liquid; a liquid transfer unit (13), which is used for transferring the liquid stored in the liquid storage unit (12) to the heating element (14); a power supply (16), which is used for providing power to the heating element (14); and a circuit (15), which is configured to determine, after a specific preset time point of a heating start-up period of the heating element (14), whether the liquid stored in the liquid storage unit (12) is reduced to a threshold value, wherein the preset time point is determined according to the time when the resistance change rate of the heating element (14) is reduced to a first resistance change rate during a heating process, for example, the first resistance change rate is 1% to 30% of the resistance change rate of the heating element (14) during initial heating start-up. After the resistance change rate of the heating element (14) is reduced to a first resistance change rate, whether dry burning occurs in the second half of each instance of vaping can be accurately determined, thus preventing the generation of undesirable harmful gases and a scorched odor, preventing damage to a user's health, and improving the vaping experience of the user.

FIG. 1

## Description

### CROSS-REFERENCE TO RELATED APPLICATIONS

This application claims priority to Chinese Patent Application No. 202011160206.2, filed with the China National Intellectual Property Administration on October 27, 2020 and entitled "AEROSOL GENERATION APPARATUS", which is incorporated herein by reference in its entirety.

### TECHNICAL FIELD

This application relates to the field of cigarette device technologies, and in particular, to an aerosol generation apparatus.

### BACKGROUND

One type of aerosol generation apparatus is to heat e-liquid to generate smoke for a user to inhale, and generally includes two parts: a vaporizer and a battery assembly. The vaporizer stores the e-liquid and is arranged with a vaporization core for heating the e-liquid. The battery assembly can supply power to the vaporization core to generate high temperature to heat the e-liquid.

The patent document with the application publication No. CN103338665A discloses an electrically operated aerosol generation system. The slope of a temperature curve of a heater increases with the emptying of a liquid storage part during the 0s to 0.2s period of each inhalation action. Therefore, the linear characteristics of the temperature rise rate in an "empty" region between X1 and X2 inhalation can be used to measure the amount of a remaining aerosol-forming substrate in the liquid storage part. Therefore, the change of the temperature level can be determined more quickly and the risk of worsening of the aerosol characteristics can be reduced.

The problem with this method is that the temperature of the heater rises sharply between 0s and 0.2s of each inhalation action, and the duration of this period is very short and the temperature data fluctuates greatly. Therefore, the method of monitoring the slope of the temperature curve of the heater during this period cannot accurately determine whether the amount of the liquid storage part has decreased to the threshold.

### SUMMARY

This application provides an aerosol generation apparatus to resolve the problem of how to accurately identify the liquid loss of the aerosol generation apparatus at an appropriate time during the inhalation of the aerosol generation apparatus.

To resolve the foregoing technical problem, this application provides an aerosol generation apparatus, including:

    a liquid storage unit, configured to store a liquid for generating an aerosol;
    a heating element, configured to heat the liquid;
    a liquid transfer unit, configured to transfer the liquid stored in the liquid storage unit to the heating element;
    a power supply, configured to supply power to the heating element; and
    a circuit, configured to determine whether the liquid stored in the liquid storage unit has decreased to a threshold after a corresponding preset time point when a resistance change rate of the heating element decreases to a first resistance change rate during a period when the heating element starts for heating.

As a specific implementation, the circuit determines whether the liquid stored in the liquid storage unit has decreased to the threshold according to a comparison result of amplitudes of the resistance change rate of the heating element and a preset resistance change rate. As an optional example, the preset time point may be predetermined according to the aerosol generation apparatus with a determined heater, for example, the preset time point is after the heating element starts for continuous heating for 600 ms. Preferably, the preset time point is after the heating element starts for continues heating for 800 ms; and further preferably, the preset time point is after the heating element starts for continuous heating for 1000 ms. For the determined heater, in a case that the liquid supply is sufficient, a heating temperature rise curve or a resistance change curve of the heater can be obtained through a test in advance, so that the resistance change rate can be calculated according to the curve, and when the resistance change rate of the heater decreases to a specific value (for example, the first resistance change rate is 1%~30% of the resistance change rate at the initial heating), the corresponding preset time point can be determined. It can be understood that the preset time point can also be determined by a time when the resistance change rate of the heater monitored in real time during the heating period decreases to a specific value.

According to another aspect, this application provides an aerosol generation apparatus, including:

    a liquid storage unit, configured to store a liquid for generating an aerosol;
    a heating element, configured to heat the liquid;
    a liquid transfer unit, configured to transfer the liquid stored in the liquid storage unit to the heating element;
    a power supply, configured to supply power to the heating element; and
    a circuit, configured to determine whether the liquid stored in the liquid storage unit has decreased to a threshold by comparing a real-time resistance of the heating element with a preset maximum threshold, during a period when the heating element initially starts for continuous heating to a corresponding preset time point when a resistance change rate of the heating element decreases to a first resistance change rate; or determine whether the liquid stored in the liquid storage unit has decreased to the threshold by comparing a difference between the real-time resistance of the heating element and an initial resistance with a preset difference; and

further configured to determine whether the liquid stored in the liquid storage unit has decreased to the threshold by comparing the resistance change rate of the heating element with a preset resistance change rate during a heating period after the preset time point.

There is a large probability that the liquid loss in the aerosol generation apparatus occurs in the second half of each inhalation period (that is, the continuous heating period of the heating element), and the resistance change rate of the heating element decreases gradually during the heating period. Therefore, only after the resistance change rate of the heating element decreases to the first resistance change rate, whether the liquid supplied to the heating element is missing, that is, whether the supplied liquid decreases to the threshold, can be more advantageously and accurately determined, to avoid the generation of unexpected harmful gases and burning smell, prevent damage to health of a user, and improve the inhalation experience of the user.

**BRIEF DESCRIPTION OF THE DRAWINGS**

The objective implementation, functional features and advantages of this application are further illustrated with reference to the accompanying drawings by using the embodiments. One or more embodiments are exemplarily described with reference to the corresponding figures in the accompanying drawings, and the descriptions do not constitute a limitation to the embodiments. Components in the accompanying drawings that have same reference numerals are represented as similar components, and unless otherwise particularly stated, the figures in the accompanying drawings are not drawn to scale.

FIG. 1 is a schematic diagram of an aerosol generation apparatus according to an embodiment of this application;
FIG. 2 is a schematic diagram of a resistance detection circuit in an aerosol generation apparatus according to an embodiment of this application;
FIG. 3 is a schematic diagram of another resistance detection circuit in an aerosol generation apparatus according to an embodiment of this application;
FIG. 4 is a schematic diagram of a control process of an aerosol generation apparatus according to an embodiment of this application;
FIG. 5 is a schematic diagram of a curve of a control process of an aerosol generation apparatus according to an embodiment of this application;
FIG. 6 is a schematic diagram of another curve of a control process of an aerosol generation apparatus according to an embodiment of this application; and
FIG. 7 is a schematic diagram of still another curve of a control process of an aerosol generation apparatus according to an embodiment of this application.

**DETAILED DESCRIPTION**

It should be understood that the specific embodiments described herein are merely used for explaining this application but are not intended to limit this application. For ease of understanding of this application, this application is described below in more detail with reference to accompanying drawings and specific implementations. It should be noted that, when an element is expressed as "being fixed to" another element, the element may be directly on the another element, or one or more intermediate elements may exist between the element and the another element. When an element is expressed as "being connected to" another element, the element may be directly connected to the another element, or one or more intermediate elements may exist between the element and the another element. The terms "upper", "lower", "left", "right", "inner", "outer", and similar expressions used in this specification are merely used for an illustrative purpose.

Unless otherwise defined, meanings of all technical and scientific terms used in this specification are the same as that usually understood by a person skilled in the technical field to which this application belongs. The terms used in this specification of this application are merely intended to describe objectives of the specific implementations, and are not intended to limit this application. The term "and/or" used in this specification includes any or all combinations of one or more related listed items.

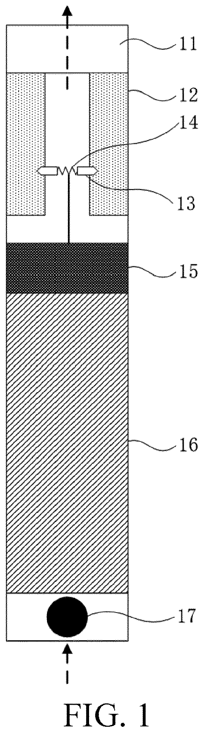

FIG. 1 is a schematic diagram of an aerosol generation apparatus according to an embodiment of this application.

As shown in FIG. 1, the aerosol generation apparatus includes a suction nozzle 11, a liquid storage unit 12, a liquid transfer unit 13, a heating element 14, a circuit 15, a power supply 16, and a sensor 17.

The suction nozzle 11 is configured for a user to inhale an aerosol generated by heating.

The liquid storage unit 12 is configured to store a liquid for generating an aerosol. The liquid may be a liquid including tobacco substances containing volatile tobacco flavor components, or may be a liquid including non-tobacco substances. For example, the liquid may include water, a solvent, ethanol, a plant extract, a spice, a fragrance, or a vitamin mixture. The spice may include menthol, peppermint, green mint oil, and various fruit flavor ingredients, but is not limited thereto. The fragrance may include ingredients that can provide a variety of smells or flavors to users. The vitamin mixture may be a substance mixed with at least one of vitamin A, vitamin B, vitamin C, and vitamin E, but is not limited thereto. In addition, the liquid may include an aerosol forming agent, such as glycerol and propylene glycol.

The liquid transfer unit 13 can transfer the liquid stored in the liquid storage unit 12 to the heating element 14. For example, the liquid transfer unit 13 may be cotton fiber, ceramic fiber, or glass fiber, but is not limited thereto.

The heating element 14 is a component for heating the liquid transferred by the liquid transfer unit 13. For example, the heating element 14 may be a metal wire, a metal plate, or a ceramic heater, but is not limited thereto. In addition, the heating element 14 may be composed of a conductive heating wire such as a nickel-chromium wire, and may be arranged into a structure wound on the liquid transfer unit 13. The heating element 14 may be heated by a current supply and transfer heat to the liquid in contact with the heating element 14 to heat the liquid, to generate the aerosol. In this example, the heating element 14 is made of a material with resistance temperature coefficient characteristics, such as: stainless steel 316, titanium, nickel, or nickel-chromium alloy.

The circuit 15 can control the overall operation of the aerosol generation apparatus. Specifically, the circuit 15 not only controls the operation of the power supply 16 and the heating element 14, but also controls the operation of other elements in the aerosol generation apparatus. In addition, the circuit 15 can determine whether the aerosol generation apparatus is operable by checking the status of the components of the aerosol generation apparatus.

The circuit 15 includes at least one processor. The processor may include a logic gate array, or may include a combination of a general-purpose microprocessor and a memory that stores an executable program in the microprocessor. In addition, a person skilled in the art should understand that the circuit 15 may include another type of hardware.

The power supply 16 is configured to provide power for operating the aerosol generation apparatus. For example, the power supply 16 can provide power to heat the heating element 14, and can provide power required for operating the circuit 15. In addition, the power supply 16 can provide power required for operating a sensor, a motor, and the like provided in the aerosol generation apparatus.

The power supply 16 may be, but is not limited to, a lithium iron phosphate (LiFePO4) battery. For example, the power supply 16 may be a lithium cobaltate (LiCoO2) battery or a lithium titanate battery. The power supply 16 may be a rechargeable battery or a disposable battery.

The sensor 17 is configured to detect an inhalation action of a user and generate a corresponding electrical signal, so that the circuit 15 controls the operation of the power supply 16, the heating element 14, and the like according to the electrical signal. The sensor 17 may be a common pressure sensor, a differential pressure sensor, an airflow sensor, or the like.

An air inlet hole is provided at a position at which the aerosol generation apparatus is close to the sensor 17. When the aerosol generation apparatus is inhaled, an airflow enters through the air inlet hole, flows through the sensor 17, the power supply 16, the circuit 15, the heating element 14, and the like, and then flows out through the suction nozzle 11. The dotted arrow in the figure roughly shows the airflow path.

It should be noted that, FIG. 1 merely shows components related to this embodiment. A person of ordinary skill in the art should understand that the aerosol generation apparatus may further include other general components besides those shown in FIG. 1.

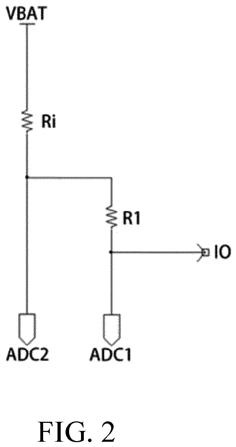

FIG. 2 is a schematic diagram of a resistance detection circuit according to an embodiment of this application.

As shown in FIG. 2, Ri is the heating element 14, and R1 is a sampling resistor. The heating element 14 and the sampling resistor R1 are connected in series between the power supply 16 (shown by VBAT in the figure) and a push-pull output port IO of a processor. A first voltage sampling port ADC1 of the processor is connected at one end of the sampling resistor R1, and a second voltage sampling port ADC2 of the processor is connected at the other end of the sampling resistor R1. Compared with the prior art, a switch tube connected in series with the sampling resistor R1 and an associated resistor thereof (with a larger resistance) are omitted.

When the resistance of the heating element 14 needs to be detected, the push-pull output port IO outputs a low level, then the processor obtains the voltage $V_{ADC1}$ through the first voltage sampling port ADC1, and obtains the voltage $V_{ADC2}$ through the second voltage sampling port ADC2, and then the resistance of the heating element 14 can be obtained through the following formula:

$$Ri = \frac{(V_{BAT} - V_{ADC2}) \times R1}{(V_{ADC2} - V_{ADC1})}$$

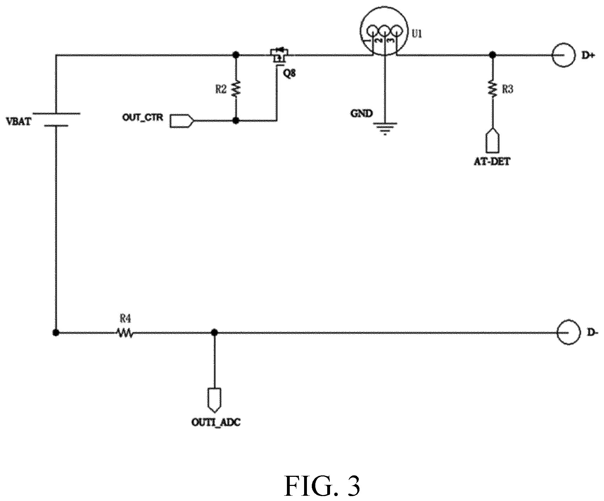

FIG. 3 is a schematic diagram of another resistance detection circuit according to an embodiment of this application.

As shown in FIG. 3, the circuit 15 includes a switch tube Q8, the heating element 14 (connected to ends D+ and D- in the figure), and a sampling resistor R4 connected in series successively between the positive and negative poles of the power supply 16 (shown by VBAT in the figure), and U1 is the sensor 17. A control end of the switch tube Q8 is connected to a control port OUT_CTR of the processor. The control port OUT_CTR can control connection or disconnection of the switch tube Q8. A first voltage sampling port AT-DET of the processor is arranged between the switch tube Q8 and the heating element 14, and a second voltage sampling port OUT1-ADC of the processor is arranged between the heating element 14 and the sampling resistor R4. Compared with the prior art, the switch tube connected in series with the sampling resistor R1 and an associated resistor thereof (with a larger resistance) are also omitted, and instead, a main circuit is used to detect the resistance.

Specifically, when the sensor 17 detects inhalation, the processor controls connection of the switch tube Q8 through the control port OUT_CTR, then the processor obtains the voltage $V_{AT-DET}$ through the first voltage sampling port AT-DET, and obtains the voltage $V_{OUT1-ADC}$ through the second voltage sampling port OUT1-ADC, and then the resistance of the heating element 14 can be obtained through the following formula:

$$Ri = \frac{V_{AT-DET} \times R4}{V_{OUT1-ADC}} - R4$$

Based on the resistance detection circuits in FIG. 2 and FIG. 3, the circuit 15 is configured to determine whether the liquid stored in the liquid storage unit has decreased to a threshold after a corresponding preset time point when a resistance change rate of the heating element 14 decreases to the first resistance change rate during a period when the heating element 14 starts for heating. The value of the first resistance change rate herein is usually small, and is less than the resistance change rate of the heating element during the heating period just starting.

As a preferred example, the preset time point is determined according to a corresponding time when the resistance change rate of the heating element 14 decreases from a second resistance change rate of the heating element 14 at the initial startup of heating to the first resistance change rate, and the first resistance change rate is 1%-30% of the second resistance change rate. It can be understood that the second resistance change rate can be considered as the resistance change rate of the heating element 14 in a short period of time at the initial startup, and the resistance change rate in this period is usually large.

In this example, after the resistance change rate of the heating element decreases to 1%~30% of the second resistance change rate, whether the liquid stored in the liquid storage unit 12 has decreased to the threshold is determined, which can avoid the problem of inaccurate determining caused by large fluctuations in the temperature (or real-time resistance) data of the heating element in an early stage. Preferably, whether the liquid stored in the liquid storage unit 12 has decreased to the threshold may be determined after the resistance change rate of the heating element decreases to 5%~30% of the second resistance change rate; further preferably, whether the liquid stored in the liquid storage unit 12 has decreased to the threshold may be determined after the resistance change rate of the heating element decreases to 5%~25% of the second resistance change rate; further preferably, whether the liquid stored in the liquid storage unit 12 has decreased to the threshold may be determined after the resistance change rate of the heating element decreases to 5%~20% of the second resistance change rate; further preferably, whether the liquid stored in the liquid storage unit 12 has decreased to the threshold may be determined after the resistance change rate of the heating element decreases to 10%~20% of the second resistance change rate.

In an example, the preset time point is after the heating element starts for continuous heating for 600 ms (including 600 ms); preferably, the preset time point is after the heating element starts for continuous heating for 800 ms (including 800 ms); and further preferably, the preset time point is after the heating element starts for continuous heating for 1000 ms (including 1000 ms).

In an example, the circuit 15 is configured to determine whether the liquid stored in the liquid storage unit 12 has decreased to the threshold according to amplitudes of the resistance change rate of the heating element 14 and a preset resistance change rate.

Specifically, If the resistance change rate of the heating element 14 is greater than the preset resistance change rate, it is determined that the liquid stored in the liquid storage unit 12 has decreased to the threshold. In this case, the circuit 15 is further configured to control the power supply to stop outputting power to the heating element 14.

Further, the circuit 15 is configured to determine whether the liquid stored in the liquid storage unit 12 has decreased to the threshold according to a quantity of times that the resistance change rate of the heating element 14 continuously exceeds the preset resistance change rate.

Specifically, If the resistance change rate of the heating element 14 is continuously greater than the preset resistance change rate for more than a first preset quantity of times, it is determined that the liquid stored in the liquid storage unit 12 has decreased to the threshold. In this case, the circuit 15 is further configured to control the power supply to stop outputting power to the heating element 14.

In this example, the circuit 15 is configured to store a real-time resistance 15 of the heating element 14 through a preset buffer region and calculate the resistance change rate of the heating element 14:

$K_j=(R_{N+j}-R_{0+j})/R_{0+j}$, where $K_j$ is the resistance change rate of the heating element 14, N is a length of the preset buffer region, and j is a natural number.

For example, assuming that N=5, and when j=0, $K_0=(R_5-R_0)/R_0$; when j=1, $K_1=(R_6-R_1)/R_1$; when j=2, $K_2=(R_7-R_2)/R_2$; when j=3, $K_3=(R_8-R_3)/R_3$; and the rest is deduced by analogy.

In this example, generally, there is a liquid in the first half of each inhalation, but there is no liquid in the second half (for example, the liquid supply is insufficient), which causes the resistance change rate of the heating element 14 to be continuously greater than the preset resistance change rate for more than the first preset quantity of times.

In an example, the circuit 15 is configured to determine whether the liquid stored in the liquid storage unit 12 has decreased to the threshold according to amplitudes of the real-time resistance of the heating element 14 and an over-temperature threshold.

In this example, the circuit 15 is configured to:

reduce the power outputted to the heating element 14 to maintain a temperature of the heating element 14 as a preset temperature, or maintain the real-time resistance of the heating element 14 as a resistance corresponding to the preset temperature, in a case that the real-time resistance e of the heating element 14 exceeds the over-temperature threshold; and determine that the liquid stored in the liquid storage unit 12 has decreased to the threshold, in a case that when the power outputted to the heating element 14 decreases to a preset power, the temperature of the heating element 14 has not been successfully maintained as the preset temperature, or the real-time resistance of the heating element 14 has not been successfully maintained as the resistance corresponding to the preset temperature.

The over-temperature threshold is a resistance corresponding to a maximum vaporization temperature acceptable by the aerosol generation apparatus during inhalation. The over-temperature threshold may be a default threshold or a dynamic threshold, which is determined according to different materials of the heating element 14. The preset temperature is a vaporization temperature that the aerosol generation apparatus is expected to maintain during inhalation to achieve the best vaporization effect.

That the temperature of the heating element 14 has not been successfully maintained as the preset temperature or the real-time resistance of the heating element 14 has not been successfully maintained as the resistance corresponding to the preset temperature means that during the period when the power outputted to the heating element 14 decreases to the preset power, the real-time resistance or the temperature of the heating element 14 continues to rise. Specifically, the real-time resistance of the heating element 14 exceeds the resistance corresponding to the preset temperature, or the temperature of the heating element 14 exceeds the preset temperature.

In this example, the temperature of the heating element 14 is generally excessively high due to continuous inhalation. The normal liquid supply still leads to the situation that the temperature of the heating element 14 has not been successfully maintained as the preset temperature, or the real-time resistance of the heating element 14 has not been successfully maintained as the resistance corresponding to the preset temperature.

In an example, the circuit 15 is configured to:

obtain an initial resistance and M real-time resistances of the heating element 14 before the preset time point; calculate a difference between each real-time resistance and the initial resistance; compare M differences with M preset differences one by one; and determine that the liquid stored in the liquid storage unit 12 has decreased to the threshold, in a case that a quantity of times that the difference continuously exceeds the preset difference is greater than a second preset quantity of times.

In this example, generally, since the liquid storage unit 12 has no liquid or very low content of the liquid, the quantity of times that the difference continuously exceeds the preset difference is greater than the second preset quantity of times. Therefore, N different values are set for identification. The N preset differences are empirical values or test values, for example, obtained by integrating test data through a large number of tests. N is a positive integer. Generally, N ranges from 8 to 16, preferably 8 to 14, and further preferably 8 to 12. A detection interval time of N real-time resistances ranges from 40 ms to 100 ms, preferably 40 ms to 80 ms.

In an example, the circuit 15 is configured to:

obtain the real-time resistance of the heating element before the preset time point; compare the real-time resistance of the heating element with a preset maximum threshold; and determine that the liquid stored in the liquid storage unit has decreased to the threshold, in a case that the real-time resistance of the heating element is greater than the preset maximum threshold.

In this example, if the liquid storage unit 12 has no liquid or very low content of the liquid, whether the liquid stored in the liquid storage unit 12 has decreased to the threshold can also be determined by comparing the real-time resistance of the heating element 14 with the preset maximum threshold. Generally, the preset maximum threshold is greater than the above over-temperature threshold.

It should be noted that, In the above example, if the liquid in the liquid storage unit 12 has decreased to the threshold, outputting the power to the heating element 14 is stopped. This avoid the generation of unexpected harmful gases and burning smell, prevent damage to health of a user, and improve the inhalation experience of the user.

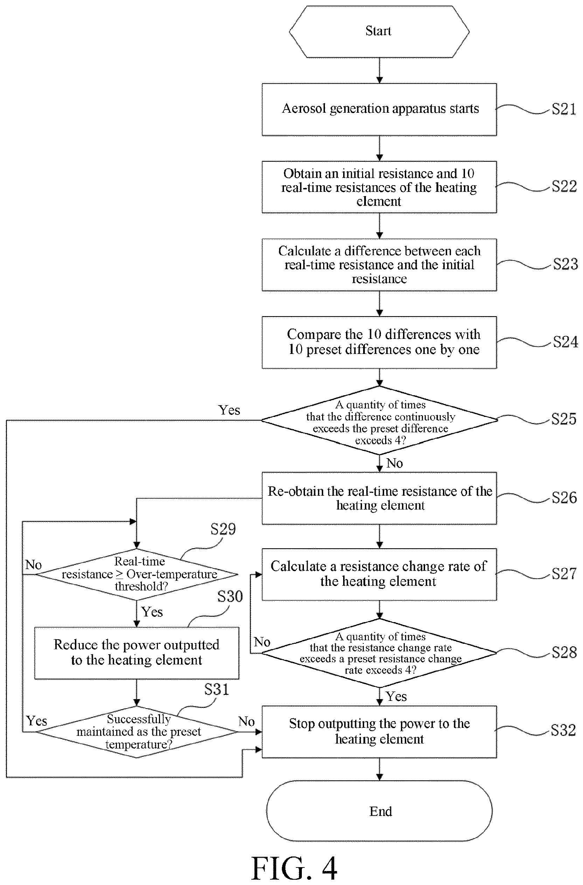

FIG. 4 is a schematic diagram of a control process of an aerosol generation apparatus according to an embodiment of this application. The control process is described with specific cases, specifically including:

Step S21: The aerosol generation apparatus starts.

Step S22: Obtain an initial resistance and 10 real-time resistances of the heating element 14. For example, the initial resistance is R0, and the real-time resistances are R1 to R10.

Step S23: Calculate a difference between each real-time resistance and the initial resistance. For example, R1-R0 (recorded as D1), R2-R0 (recorded as D2), ...R10-R0 (recorded as D10), and then 10 differences are obtained.

Step S24: Compare the 10 differences with 10 preset differences one by one. Assuming that the 10 preset differences are d1, d2, ...d10, compare the amplitudes of D1 and d1, amplitudes of D2 and d2, ...and amplitudes of D10 and d10.

Step S25: Determine whether a quantity of times that the difference continuously exceeds the preset difference exceeds 4.

Step S26: If the quantity of times that the difference continuously exceeds the preset difference exceeds 4, stop outputting the power to the heating element 14 (step S32); or otherwise, re-obtain the real-time resistance of the heating element 14 after 800 ms after the aerosol generation apparatus starts.

Step S27: Calculate the resistance change rate of the heating element 14 according to the re-obtained real-time resistance of the heating element 14.

Step S28: Determine whether a quantity of times that the resistance change rate continuously exceeds a preset resistance change rate exceeds 4; and if the quantity of times that the resistance change rate continuously exceeds the preset resistance change rate exceeds 4, stop outputting the power to the heating element 14 (step S32); or otherwise, continue comparison and determining.

Step S29: Determine whether the real-time resistance of the heating element 14 is greater than the over-temperature threshold according to the re-obtained real-time resistance of the heating element 14.

Step S30: If the real-time resistance of the heating element 14 exceeds the over-temperature threshold, reduce the power outputted to the heating element 14. otherwise, continue comparison and determining.

Step S31: Determine whether the temperature has been successfully maintained as the preset temperature; and if the temperature fails to be maintained as the preset temperature, reduce the power outputted to the heating element 14; or otherwise, continue comparison and determining.

It should be noted that, in the above control process, after the aerosol generation apparatus starts, it is feasible to performing only steps S26 to S32, and it is also feasible to perform steps S22 to S25 after the aerosol generation apparatus re-starts.

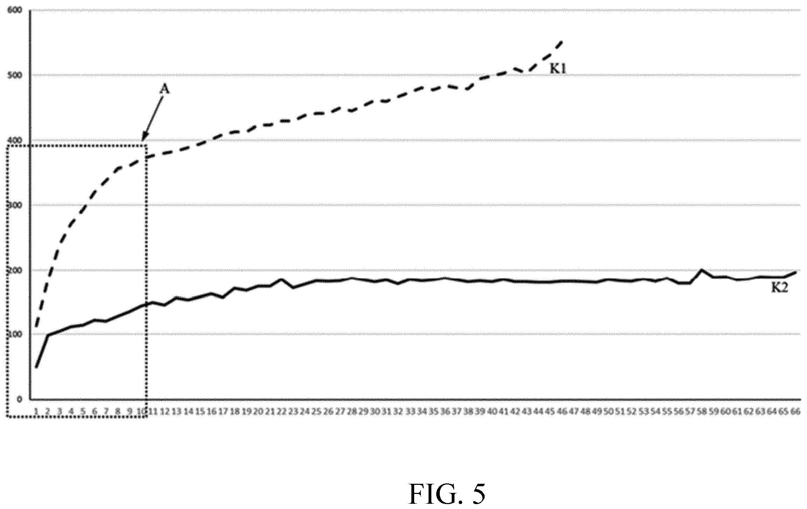

As shown in FIG. 5, a curve K1 is a curve during dry burning of the heating element 14 after the aerosol generation apparatus starts and before the aerosol generation apparatus is inhaled (for example, as shown by A in the figure), and a curve K2 is a curve when no dry burning occurs in the heating element 14 after the aerosol generation apparatus starts and before the aerosol generation apparatus is inhaled. The ordinate in the figure is the resistance (milliohm) of the heating element 14, and the abscissa is the quantity of resistance detection times. It should be noted that, for ease of description, a change curve between the curves K1 and K2 is not shown, and can be understood with reference to the curves K1 and K2.

Within the first 800 ms, by obtaining the initial resistance and the 10 real-time resistances of the heating element 14, calculating the difference between each real-time resistance and the initial resistance, comparing the 10 differences and the 10 preset differences one by one, and determining whether the quantity of times that the difference exceeds the preset difference continuously exceeds 4, whether dry burning occurs in the heating element 14 can be identified.

It should be noted that, within the first 800 ms, since the duration is very short and the temperature data fluctuates greatly, the slope method or the resistance change rate method cannot accurately determine whether the amount of the liquid storage part has decreased to the threshold, which easily leads to inaccurate determining and affects the inhalation experience of the user. This example reduces or avoids the occurrence of inaccurate determining by comparing a plurality of differences one by one.

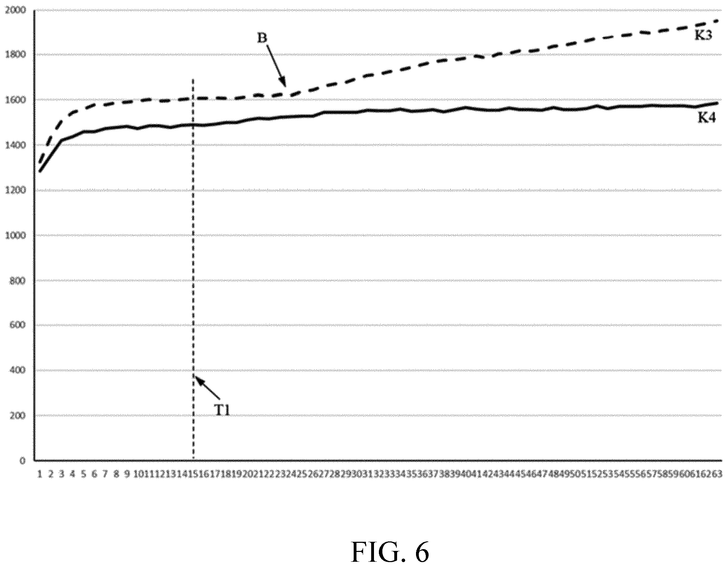

As shown in FIG. 6, a curve K3 is a curve of the heating element 14 when dry burning occurs when the aerosol generation apparatus is inhaled, and a curve K4 is a curve of the heating element 14 when dry burning does not occur when the aerosol generation apparatus is inhaled (dry burning occurs after the aerosol generation apparatus starts and before the aerosol generation apparatus is inhaled).

After 800 ms, by re-obtaining the real-time resistance of the heating element 14, calculating the resistance change rate of the heating element 14, and determining whether the resistance change rate continuously exceeds the preset resistance change rate for more than 4 times, whether dry burning occurs in the heating element 14 can be identified. As shown by B in the figure, after this time point, the slope of the curve K3 rises significantly, and it can be determined that dry burning occurs in the heating element 14 when the aerosol generation apparatus is inhaled.

It should be noted that, the above determining method described in FIG. 6 is not suitable for the entire inhalation stage, such as the case shown in FIG. 5. Since the resistance data fluctuates greatly during the period after the heating element 14 starts for heating to a specific time point (for example, a time point T1 in the figure), the above determining method can easily lead to inaccurate determining, which affects the inhalation experience of the user. The time point can be determined according to a time when the resistance change rate of the heating element 14 is reduced to 1%~30% of the resistance change rate when the heating element 14 starts for heating. The time point T1 is used as an example for description. It can be determined through calculation that the time when the resistance change rate of the curve K3 decreases to 1% of the resistance change rate when the heating element 14 starts for heating is time T1. According to the abscissa, sampling start time, and sampling interval time, T1=800 ms can be inferred. Therefore, the above determining method can reduce or avoid the occurrence of inaccurate determining after 800 ms.

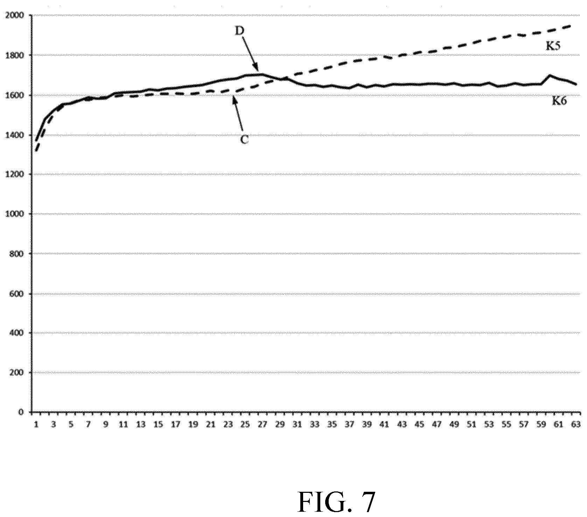

As shown in FIG. 7, a curve K5 is a curve during dry burning of the heating element 14 when the aerosol generation apparatus is inhaled, and a curve K6 is a curve when no dry burning occurs in the heating element 14 when the aerosol generation apparatus is inhaled.

After 800 ms, the real-time resistance of the heating element 14 can also be re-obtained and compared with the over-temperature threshold. If the real-time resistance of the heating element 14 exceeds the over-temperature threshold, the power outputted to the heating element 14 is reduced. When the temperature of the heating element 14 is successfully maintained as the preset temperature, it can be determined that dry burning occurs in the heating element 14 when the aerosol generation apparatus is inhaled. As shown in D in the figure, the real-time resistance of the heating element 14 at this node exceeds the over-temperature threshold. After reducing the power output to the heating element 14, the temperature of the heating element 14 is successfully maintained as the preset temperature.

As shown in C in the figure, the real-time resistance of the heating element 14 at this node exceeds the over-temperature threshold. After reducing the power output to the heating element 14, the temperature of the heating element 14 has not been successfully maintained as the preset temperature, and the resistance of the heating element 14 is still rising. Therefore, it can be determined that dry burning occurs in the heating element 14 when the aerosol generation apparatus is inhaled.

It should be noted that, the specification of this application and the accompanying drawings thereof illustrate preferred embodiments of this application. However, this application may be implemented in various different forms, and is not limited to the embodiments described in this specification. These embodiments are not intended to be an additional limitation on the content of this application, and are described for the purpose of providing a more thorough and comprehensive understanding of the content disclosed in this application. Moreover, the foregoing technical features are further combined to form various embodiments not listed above, and all such embodiments shall be construed as falling within the scope of this application. Further, a person of ordinary skill in the art may make improvements or modifications according to the foregoing description, and all the improvements and modifications shall fall within the protection scope of the attached claims of this application.

## Claims

1. An aerosol generation apparatus, comprising:

   a liquid storage unit, configured to store a liquid for generating an aerosol;
   a heating element, configured to heat the liquid;
   a liquid transfer unit, configured to transfer the liquid stored in the liquid storage unit to the heating element;
   a power supply, configured to supply power to the heating element; and
   a circuit, configured to determine whether the liquid stored in the liquid storage unit has decreased to a threshold after a corresponding preset time point when a resistance change rate of the heating element decreases to a first resistance change rate during a period when the heating element starts for heating.

2. The aerosol generation apparatus according to claim 1, wherein the preset time point is determined according to a corresponding time when the resistance change rate of the heating element decreases from a second resistance change rate of the heating element at the initial startup of heating to the first resistance change rate, and the first resistance change rate is 1%-30% of the second resistance change rate.

3. The aerosol generation apparatus according to claim 1, wherein the preset time point is after the heating element starts for continuous heating for 600 ms; preferably, the preset time point is after the heating element starts for continues heating for 800 ms; and further preferably, the preset time point is after the heating element starts for continuous heating for 1000 ms.

4. The aerosol generation apparatus according to claim 1 or 2, wherein the circuit is configured to determine whether the liquid stored in the liquid storage unit has decreased to the threshold according to amplitudes of the resistance change rate of the heating element and a preset resistance change rate.

5. The aerosol generation apparatus according to claim 4, wherein the circuit is configured to determine whether the liquid stored in the liquid storage unit has decreased to the threshold according to a quantity of times that the resistance change rate of the heating element continuously exceeds the preset resistance change rate.

6.  The aerosol generation apparatus according to any one of claims 1 to 5, wherein the circuit is configured to store a real-time resistance of the heating element through a preset buffer region and calculate the resistance change rate of the heating element: $K_j = (R_{N+j} - R_{0+j})/R_{0+j}$, wherein $K_j$ is the resistance change rate of the heating element, N is a length of the preset buffer region, and j is a natural number.

7.  The aerosol generation apparatus according to claim 1 or 2, wherein the circuit is further configured to determine whether the liquid stored in the liquid storage unit has decreased to the threshold according to amplitudes of a real-time resistance of the heating element and an over-temperature threshold.

8.  The aerosol generation apparatus according to claim 7, wherein the circuit is configured to:

    reduce the power outputted to the heating element to maintain a temperature of the heating element as a preset temperature, or maintain the real-time resistance of the heating element as a resistance corresponding to the preset temperature, in a case that the real-time resistance of the heating element exceeds the over-temperature threshold; and
    determine that the liquid stored in the liquid storage unit has decreased to the threshold, in a case that when the power outputted to the heating element decreases to a preset power, the temperature of the heating element has not been successfully maintained as the preset temperature, or the real-time resistance of the heating element has not been successfully maintained as the resistance corresponding to the preset temperature.

9.  The aerosol generation apparatus according to any one of claims 1 to 8, wherein the circuit is further configured to:

    obtain an initial resistance and M real-time resistances of the heating element during the period when the heating element initially starts for continuous heating to the preset time point;
    calculate a difference between each real-time resistance and the initial resistance;
    compare M differences with M preset differences one by one; and
    determine that the liquid stored in the liquid storage unit has decreased to the threshold, in a case that a quantity of times that the difference continuously exceeds the preset difference is greater than a preset quantity of times.

10. The aerosol generation apparatus according to any one of claims 1 to 8, wherein the circuit is further configured to:

    obtain the real-time resistance of the heating element during the period when the heating element initially starts for continuous heating to the preset time point;
    compare the real-time resistance of the heating element with a preset maximum threshold; and
    determine that the liquid stored in the liquid storage unit has decreased to the threshold, in a case that the real-time resistance of the heating element is greater than the preset maximum threshold.

11. The aerosol generation apparatus according to any one of claims 1 to 10, wherein the circuit comprises a processor and a sampling resistor;

    the processor has a first voltage sampling port, a second voltage sampling port, and a push-pull output port;
    the heating element and the sampling resistor are connected in series between a positive pole of the power supply and the push-pull output port; and two ends of the sampling resistor are respectively connected to the first voltage sampling port and the second voltage sampling port.

12. The aerosol generation apparatus according to any one of claims 1 to 10, wherein the circuit comprises a processor, and a switch tube, a heating element, and a sampling resistor successively connected in series between a positive pole and a negative pole of the power supply;

    the processor has a first voltage sampling port, a second voltage sampling port, and a control port;
    the control port is connected to a control end of the switch tube to control connection or disconnection of the switch tube; and
    the first voltage sampling port is arranged between the switch tube and the heating element, and the second voltage sampling port is arranged between the heating element and the sampling resistor.

13. An aerosol generation apparatus, comprising:

    a liquid storage unit, configured to store a liquid for generating an aerosol;
    a heating element, configured to heat the liquid;
    a liquid transfer unit, configured to transfer the liquid stored in the liquid storage unit to the heating element;

a power supply, configured to supply power to the heating element; and

a circuit, configured to determine whether the liquid stored in the liquid storage unit has decreased to a threshold by comparing a real-time resistance of the heating element with a preset maximum threshold, during a period when the heating element initially starts for continuous heating to a corresponding preset time point when a resistance change rate of the heating element decreases to a first resistance change rate; or determine whether the liquid stored in the liquid storage unit has decreased to the threshold by comparing a difference between the real-time resistance of the heating element and an initial resistance with a preset difference; and

further configured to determine whether the liquid stored in the liquid storage unit has decreased to the threshold by comparing the resistance change rate of the heating element with a preset resistance change rate during a heating period after the preset time point.

FIG. 1

VBAT

Ri

R1

IO

ADC2  ADC1

FIG. 2

FIG. 3

Start

Aerosol generation apparatus starts — S21

Obtain an initial resistance and 10 real-time resistances of the heating element — S22

Calculate a difference between each real-time resistance and the initial resistance — S23

Compare the 10 differences with 10 preset differences one by one — S24

A quantity of times that the difference continuously exceeds the preset difference exceeds 4? — S25

Yes

No

Re-obtain the real-time resistance of the heating element — S26

S29
Real-time resistance ≥ Over-temperature threshold?

No

Yes

S30

Reduce the power outputted to the heating element

S31

Successfully maintained as the preset temperature?

Yes

No

Calculate a resistance change rate of the heating element — S27

A quantity of times that the resistance change rate exceeds a preset resistance change rate exceeds 4? — S28

No

Yes

Stop outputting the power to the heating element — S32

End

FIG. 4

FIG. 5

FIG. 6

FIG. 7

## INTERNATIONAL SEARCH REPORT

| International application No. |
|---|
| **PCT/CN2021/126447** |

### A. CLASSIFICATION OF SUBJECT MATTER

A24F 40/46(2020.01)i; A24F 40/40(2020.01)i

According to International Patent Classification (IPC) or to both national classification and IPC

### B. FIELDS SEARCHED

Minimum documentation searched (classification system followed by classification symbols)

A24F

Documentation searched other than minimum documentation to the extent that such documents are included in the fields searched

Electronic data base consulted during the international search (name of data base and, where practicable, search terms used)

CNPAT, CNKI, WPI, EPODOC: 气溶胶, 源, 油, 烟, 液, 时间, 时刻, 缺失, 耗尽, 不足, 干烧, 电阻, 阻值, 温度, 变化率, 变化, 阈值, 正常, 异常, liquid, oil, time, exhaust+, dry, lack, resistance, temperature, chang+, rate, abnormal, threshold

### C. DOCUMENTS CONSIDERED TO BE RELEVANT

| Category* | Citation of document, with indication, where appropriate, of the relevant passages | Relevant to claim No. |
|---|---|---|
| X | CN 108851233 A (HESTIA SHENZHEN BIOTECHNOLOGY CO., LTD.) 23 November 2018 (2018-11-23)<br>description, paragraphs [0007]-[0016], [0030]-[0036], figures 1-6 | 1-3, 6, 11-12 |
| Y | CN 108851233 A (HESTIA SHENZHEN BIOTECHNOLOGY CO., LTD.) 23 November 2018 (2018-11-23)<br>description, paragraphs [0007]-[0016], [0030]-[0036], figures 1-6 | 4-5, 7-10, 13 |
| Y | CN 110487848 A (SHENZHEN SMOORE TECHNOLOGY LIMITED) 22 November 2019 (2019-11-22)<br>description, paragraphs [0005]-[0010], and figures 1-8 | 7-10 |
| Y | CN 109588785 A (SHENZHEN TIMEYAA ELECTRONIC TECHNOLOGY CO., LTD.) 09 April 2019 (2019-04-09)<br>description, paragraph [0042] | 4-5, 13 |
| A | CN 107440157 A (HUIZHOU XINHONGWEI TECHNOLOGY CO., LTD.) 08 December 2017 (2017-12-08)<br>entire document | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2022** | **27 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/126447**

### C. DOCUMENTS CONSIDERED TO BE RELEVANT

| Category* | Citation of document, with indication, where appropriate, of the relevant passages | Relevant to claim No. |
|---|---|---|
| A | CN 111134371 A (CHANGZHOU PAITENG ELECTRONIC TECHNOLOGY SERVICE CO., LTD.) 12 May 2020 (2020-05-12) entire document | 1-13 |
| A | WO 2019244324 A1 (JAPAN TOBACCO INC.) 26 December 2019 (2019-12-26) entire document | 1-13 |

Form PCT/ISA/210 (second sheet) (January 2015)

**INTERNATIONAL SEARCH REPORT**
Information on patent family members

International application No.

**PCT/CN2021/126447**

| Patent document cited in search report | | | Publication date (day/month/year) | Patent family member(s) | | | Publication date (day/month/year) |
|---|---|---|---|---|---|---|---|
| CN | 108851233 | A | 23 November 2018 | WO | 2019192226 | A1 | 10 October 2019 |
| | | | | CN | 108851233 | B | 28 February 2020 |
| CN | 110487848 | A | 22 November 2019 | | None | | |
| CN | 109588785 | A | 09 April 2019 | CN | 209563498 | U | 01 November 2019 |
| CN | 107440157 | A | 08 December 2017 | WO | 2019033886 | A1 | 21 February 2019 |
| | | | | CN | 107440157 | B | 07 April 2020 |
| | | | | CN | 207236087 | U | 17 April 2018 |
| CN | 111134371 | A | 12 May 2020 | | None | | |
| WO | 2019244324 | A1 | 26 December 2019 | EP | 3811803 | A1 | 28 April 2021 |
| | | | | JP | WO2019244324 | A1 | 17 December 2020 |
| | | | | JP | 6869436 | B2 | 12 May 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011160206
- CN 103338665 A